# EUROPÄISCHE PATENTANMELDUNG

(11) **EP 1 109 153 A1**
(43) Veröffentlichungstag der Anmeldung: **20.06.2001**
(21) Anmeldenummer: 00124470.6
(22) Anmeldetag: 08.11.2000
(51) Int. Cl.: G10L 15/22

(54) **Haushaltsgerät**

(30) Priorität: 14.12.1999 DE 19960256
(71) Anmelder: BSH Bosch und Siemens Hausgeräte GmbH, 81669 München (DE)
(72) Erfinder: Deiss, Ulrich, 89567 Sontheim (DE); Rosenbauer, Michael, 86756 Reimlingen (DE); Reiter, Bruno, 73450 Neresheim-Kösingen (DE); Hering, Reinhard, 89438 Holzheim (DE)

(57) **Zusammenfassung**

Um ein Haushaltsgerät, insbesondere ein elektrisch betriebenes Haushaltsgerät, dessen Betriebsfunktionen durch am Haushaltsgerät vorgesehene mechanische Bedienelemente und/oder durch mindestens eine auf Sprachsignale reagierende Einrichtung steuerbar sind, so auszubilden, daß auch bei optisch nicht mehr wahrnehmbaren Kontroll- und Meldeelementen des Haushaltsgerätes dem Benutzer bei Erteilung von Sprachbefehlen noch eine Kontrolle über die Ausführung dieser Sprachbefehle möglich ist erfolgt bei einer Steuerung durch Eingabe von Sprachsignalen mittels einer im Haushaltsgerät vorgesehenen, akustische Signale abgebenden Einheit eine Rückmeldung über den Empfang der Sprachsignale.

## Beschreibung

Die Erfindung betrifft ein Haushaltsgerät, insbesondere elektrisch betriebenes Haushaltsgerät, dessen Betriebsfunktionen durch am Haushaltsgerät vorgesehene mechanische Bedienelemente und/oder durch mindestens eine auf Sprachsignale reagierende Einrichtung steuerbar sind.

Ein solches Haushaltsgerät ist durch die DE-A-197 23 938 bekannt. Bei diesem bekannten Haushaltsgerät ist zur Erhöhung der Sicherheit bei Steuerung durch Sprachsignale vorgesehen, daß nur dann Steuerbefehle ausgeführt werden, wenn die Sprachsignale innerhalb einer vorgegebenen Zeit erfolgen. Hierdurch wird sichergestellt, daß das Haushaltsgerät nicht durch irgendwelche zufällig empfangenen Sprachsignale betätigt wird.

Es gibt Haushaltsgeräte, die entweder vollständig in eine Möbelzeile eingebaut sind oder deren Frontseite mittels einer in ihrem Dekor dem Dekor einer vorhandenen Möbelzeile entsprechenden Möbelplatte verkleidet ist. Damit ist bei derartigen Haushaltsgeräten deren Bedienfeld nicht mehr zu erkennen. Somit können auch eventuell am Bedienfeld angeordnete Kontroll- oder Meldeelemente nicht mehr wahrgenommen werden.

Der Erfindung liegt die Aufgabe zugrunde, ein Haushaltsgerät der eingangs beschriebenen Art so auszubilden, daß auch bei optisch nicht mehr wahrnehmbaren Kontrollund Meldeelementen des Haushaltsgerätes dem Benutzer bei Erteilung von Sprachbefehlen noch eine Kontrolle über die Ausführung dieser Sprachbefehle möglich ist.

Die Lösung der gestellten Aufgabe gelingt nach der Erfindung dadurch, daß bei einer Steuerung durch Eingabe von Sprachsignalen mittels einer im Haushaltsgerät vorgesehenen, akustische Signale abgebenden Einheit eine Rückmeldung über den Empfang der Sprachsignale erfolgt. Damit erhält der Benutzer des Haushaltsgerätes auch bei optisch vollkommen verdecktem Einbau des Haushaltsgerätes die Gewißheit, daß ein von ihm ausgesprochener Steuerbefehl auch tatsächlich zur Ausführung kommt. Die akustische Rückmeldung kann aus einem einfachen Tonsignal bestehen.

Vorteilhafter ist es, daß die akustische Signale abgebende Einheit eine Spracheinheit ist, durch die eine vollständige Wiederholung der eingegebenen Sprachsignale erfolgt. Hierdurch kann der Benutzer erkennen, daß der gesprochene Befehl von dem Haushaltsgerät auch richtig verstanden wurde oder daß er einen Steuerbefehl eventuell fehlerhaft abgegeben hat. Der Benutzer hat dann die Möglichkeit einen solchen fehlerhaften Steuerbefehl zu korrigieren.

Das Prinzip der sprachlichen Steuerung eines Haushaltsgerätes ist durch die DE-A-197 23 938 bekannt. Ein derartiges Haushaltsgerät braucht lediglich mit einer an sich ebenfalls bekannten Spracheinheit ausgerüstet zu werden, durch die die jeweils erteilten Sprachbefehle zur Bestätigung des einwandfreien Empfanges derselben nochmals wiedergegeben werden. Dadurch erhält der Benutzer die gewünschte Kontrolle.

## Patentansprüche

1. Haushaltsgerät, insbesondere elektrisch betriebenes Haushaltsgerät, dessen Betriebsfunktionen durch am Haushaltsgerät vorgesehene mechanische Bedienelemente und/oder durch mindestens eine auf Sprachsignale reagierende Einrichtung steuerbar sind, dadurch gekennzeichnet, daß bei einer Steuerung durch Eingabe von Sprachsignalen mittels einer im Haushaltsgerät vorgesehenen, akustische Signale abgebenden Einheit eine Rückmeldung über den Empfang der Sprachsignale erfolgt.

2. Haushaltsgerät nach Anspruch 1, dadurch gekennzeichnet, daß die akustische Signale abgebende Einheit eine Spracheinheit ist, durch die eine vollständige Wiederholung der eingegebenen Sprachsignale erfolgt.
